# EUROPEAN PATENT SPECIFICATION

(11) **EP 0 663 797 B1**
(45) Date of publication and mention of the grant of the patent: **19.06.1996**
(21) Application number: 93922902.7
(22) Date of filing: 11.10.1993
(51) Int. Cl.: A23L 1/035, A23L 1/48

(54) **A SPRAY-DRIED POWDER PRODUCT, A METHOD OF PRODUCING SAME AND A FOOD PRODUCT MADE WITH THE PRODUCT**
SPRÜHGETROCKNETES PULVERPRODUKT UND VERFAHREN ZUR HERSTELLUNG UND EIN NAHRUNGSMITTEL, HERGESTELLT AUS DIESEM PRODUKT
PRODUIT EN POUDRE OBTENU PAR ATOMISATION, PROCEDE POUR LE FABRIQUER ET PRODUIT ALIMENTAIRE REALISE AVEC CE PRODUIT

(30) Priority: 09.10.1992 DK 1242/92
(43) Date of publication of application: 26.07.1995
(73) Proprietor: NEXUS A/S, DK-7130 Juelsminde (DK)
(72) Inventor: NORN, Viggo Creemers, DK-7140 Stouby (DK); STOLBERG, Kirsten, DK-8210 Arhus V (DK); KYED, Morten Hoffmann, DK-8000 Arhus C (DK)
(74) Representative: Plougmann, Vingtoft & Partners A/S
(86) International application number: DK9300333
(87) International publication number: WO9408468

(56) References cited:
- WO-A-86/06937
- DD-A- 247 835
- J. AM. OIL CHEMISTS' SOC., Volume 51, January 1974, J.W. MANSVELT, "Protein Based Whipping Agents" page 202A-203A

## Description

The present invention relates to a method for preparing a powder containing a food-improving surface-active substance selected from organic esters of lipid nature, to such a product per se and to a food product made with such a product.

Certain surface-active products, e.g. emulsifiers or aerating agents for use in the food industry, such as e.g. partial fatty acid esters of glycerol or glycerol condensates, are substances of a fat-like consistency and behaviour, or expressed in another manner, substances of a lipid nature.

For convenient addition to the products which they are to aerate or emulsify, e.g. cake mixes or batters, they are suitably used in the form of a free-flowing powder.

Conventionally, such powders are prepared by a spray-drying process where an emulsion made from a milk product such as skim milk and the surface-active substance is spray-dried, as skim milk had been found to be a suitable carrier resulting in a powder which retains a high proportion of the surface-active property of the substance in question. However, milk products are generally relatively costly raw materials. Furthermore, milk products may contain components which are not tolerated by certain consumers.

From WO 86/06937 it is known to prepare surface-active substance-containing free-flowing powders by mixing one or more surface-active substances with one or several particulate carriers such as starch, saccharides, pentosaus and mixtures thereof and subjecting such a mixture to an extrusion process. It is also mentioned in that prior art that it is known to prepare such powders using spray-drying.

JP 73035461 discloses the preparation of a spray-dried reforming agent comprising soy lecithin, soy protein and saccharified starch.

### Disclosure of the invention

The present invention provides an economic method for preparing a desirable free-flowing powder containing a food-improving surface-active substance by spray-drying without being dependent on the use of skim milk or milk protein, the method of the invention being characterized by using a vegetable protein, which is a cheap and readily available carrier. In spite of the fact that the method of the invention is not based on the use of skim milk or milk protein, the resulting free-flowing powder nevertheless retains the valuable food-improving surface-active properties of the surface-active substance to an extent similar to or better than the spray-dried powders prepared using the conventional method based on skim milk or milk protein. In addition, the invention makes it possible to provide excellent free-flowing powdery surface-active substances which do not contain substances such as milk proteins to which some consumers may be allergic.

Thus, one main aspect of the invention relates to a method for preparing a powder containing a food-improving surface-active substance selected from organic esters of lipid nature, the method comprising spray-drying an aqueous suspension containing the surface-active substance and a vegetable protein to obtain a free-flowing powder having a water content which is at the most 6 wt%.

In a further main aspect, the present invention relates to a free-flowing powder product consisting of particles, each particle containing 10-80 wt% of a food-improving surface-active substance selected from organic esters of lipid nature, and a vegetable protein, the content of the protein being in the range of 4 to 30 wt%, calculated on the dry matter of the particles.

In a still further aspect, the present invention relates to a food product made with the powder as defined herein.

In the present description and claims, the term "food-improving surface-active substance" designates a surface-active substance which is used as an additive to or component in food products where its surface-active properties confer desired properties to the food products. Typically, the food-improving surface-active substance is a substance which, in the food product to which it is added, confers or improves whipping, emulsifying, stabilizing, texture-improving and/or aerating properties. The food product may, e.g. be a meat product, a salad dressing, a bakery product, a milk product, an ice-cream product or a confectionery product. Bakery products constitute a very important class of products in which surface-active substances are used for conferring or improving whipping, emulsifying, stabilizing, texture-improving and/or aerating properties of the doughs or batters from which the bakery products, such as bread, cakes and biscuits are made.

In the present description and claims, the term "organic ester of lipid nature" designates surface-active esters of lipid nature of
organic hydroxy group-containing compounds, such as polyhydric alcohols,
with
organic acids, typically partial esters with edible fatty acids such as lauric acid, myristic acid, palmitic acid and stearic acid and optionally additionally with lactic acid, citric acid, malic acid, succinic acid, tartaric acid or acetic acid. A special type of surface-active organic esters of lipid nature is constituted by hydroxy acids esterified at their hydroxy group, such as lactic acid esterified with a fatty acid, the esters being optionally neutralized with calcium or sodium.

The surface-active esters of lipid nature have a greasy feeling and are substantially insoluble in water at room temperature, but soluble in alcohols, ethers and other fat solvents.

An important type of surface-active organic esters of lipid nature is constituted by the above-mentioned partial esters of polyhydric alcohols which are useful, e.g. as emulsifiers in bakery products.

Examples of such partial esters of polyhydric alcohols are
partial esters of a polyhydric alcohol selected from ethylene glycol, glycerol, propylene glycol, condensates of propylene glycol, condensates of ethylene glycol, condensates of glycerol, and sugars, e.g. sucrose or sorbitol,
with
edible fatty acids, optionally further esterified with lactic acid, citric acid, malic acid, succinic acid, tartaric acid and acetic acid (but still being partial esters); and mixtures thereof.

It will be understood that the term "surface-active substance" covers as well a surface-active substance which consists of one or substantially one chemical entity as a surface-active substance which consists of a mixture of different chemical entities. Many food emulsifiers are made from starting products which are mixtures; for example, in the production of a polyglycerol partial fatty acid ester product, the glycerol reactant may be a mixture of glycerol, diglycerol and higher glycerols, or a certain condensation may take place in the esterification or reesterification process whereby diglycerol and higher glycerol condensates are formed from monomeric glycerol, and/or the acid reactant may be a mixture, e.g. hardened tallow fatty acids. In addition, two or more products (which, thus, in themselves may be mixtures) may be mixed to obtain a combination with a particular desired range of properties.

In especially interesting products of the invention, the surface-active substance is a food-improving surface-active agent, e.g. a dough-improving agent, a dough or batter emulsifier, a meat product emulsifying agent, an aerating agent for use in the food or bakery industry, an ice-cream emulsifier, a crystal growth-modifying agent for use in confectioneries and optionally a pharmaceutical surface-active agent and/or a cosmetic surface-active agent.

In the present description and claims, the term "vegetable protein" designates a protein of vegetable origin, in other words a protein obtained from or contained in vegetable material.

The vegetable protein may be added in the form of a protein product substantially comprising protein i.e. a vegetable protein isolate or a protein concentrate e.g. containing at least 65 wt%, such as at least 80 wt% or even at least 90 wt% of protein. Less concentrated vegetable products may also be used, and as will appear from the following, vegetable products containing both protein and a large proportion of carbohydrate may be used. Wherever figures are given herein for the vegetable protein, the figures indicate the content which is constituted by the vegetable protein and not the total amount of a vegetable protein-containing product added.

Two important types of sources of the vegetable protein are leguminous seeds and cereals. In the present context, the term "leguminous seeds" is used to designate seeds derived from plants belonging to the botanic family Fabaceae.

Leguminous seeds have as a common characteristic a high content of protein, typically in the range of 25 to 38 wt% calculated on dry matter. Such leguminous seeds include peas, beans, soybeans, lupines and a range of different varieties of lentils. Examples of useful leguminous seed sources of proteins are peas (seed from plants belonging to the genus Pisum), soybeans (seeds from plants belonging to the genus Glycine), and beans (seeds from plants belonging to the genus Phaseolus). A leguminous seed source of proteins which has been found to give excellent powder products is navy beans (seeds from plants belonging to the species Phaseolus vulgaris).

Other commercially available protein products which have been found to be useful are proteins of cereal origin, e.g. proteins derived from the group of cereals comprising rice, wheat, rye, barley, oat and maize. In one preferred embodiment, wheat protein is used.

The aqueous suspension subjected to the spray-drying will normally contain a carbohydrate or a mixture of carbohydrates in addition to the surface-active substance and the vegetable protein. The incorporation of a carbohydrate is preferred because carbohydrates are generally cheaper than vegetable protein and because use of vegetable protein alone may result in a high viscosity which may cause problems during processing in the spray-drying tower.

The carbohydrate(s) may be selected from monosaccharides, disaccharides, trisaccharides, oligosaccharides, polysaccharides and mixtures thereof. Examples of suitable monosaccharides are glucose, fructose, galactose, mannose, sorbitol, mannitol, dulcitol, inositol, D-ribose, D-2-deoxyribose, L-arabinose and D-xylose. Examples of suitable disaccharides are selected from the group consisting of sucrose, lactose, maltose, and trehalose.

Examples of suitable oligosaccharides are maltodextrins, and examples of suitable polysaccharides are native starch, modified starch, and starch hydrolysates. As native starch may be used starch of any botanical origin such as potato starch, rice starch, maize starch, waxy maize starch, other native cereal starches or tapioca starch. Examples of suitable modified starches are acetylated distarch adipate, acetylated distarch phosphate and hydroxypropyl distarch phosphate.

As used herein, the term "starch hydrolysates" include starch of any origin which has been subjected to varying degrees of hydrolysis resulting in a mixture of carbohydrate molecules of varying sizes. Commercial starch hydrolysates are frequently referred to as dextrins or maltodextrins. Such products may contain an amount of sweetening, low molecular compounds, e.g. maltose and glucose. In starch hydrolysate products, the content of such low molecular compounds is frequently referred to as "dextrose equivalent" (DE). In certain embodiments of the present invention, a starch hydrolysate containing a high amount of sweetening degradation products may advantageously be used, e.g. starch hydro lysates having a DE of at least 5, such as at least 10, e.g. at least 12, at least 15 or at least 20.

The water content in the aqueous suspension subjected to the spray-drying is in the range of 40 to 95 wt%, normally in the range of 40 to 80 wt%. Provided that the viscosity of the suspension can be maintained at a reasonably low level, such as at the most 4000 mPa·s (cps), preferably at the most 3000 mPa·s (cps), the upper limit of the water content can be somewhat lower, which means that a range of 40 to 70 wt%, such as a range of 40 to 60 wt%, calculated on the weight of the total suspension, may be useful. Generally speaking, a water content as low as possible is preferred because of the energy consumption involved in the removal of the water in the spray-drying.

The content of the surface-active substance(s) in the suspension is typically in the range of 1 to 80 wt%, calculated on the dry matter of the suspension, such as 10 to 80 wt%, e.g. in the range of 20 to 70 wt%, preferably in the range of 25 to 70 wt%. When the vegetable protein is derived from leguminous seeds, such as navy beans, it has been found that a typical readily obtainable range for the content of the surface-active substance is 25 to 60 wt%, such as 35 to 55 wt%. When the vegetable protein is derived from a cereal, such as wheat, it has been found that a typical readily obtainable range for the content of the surface-active substance is 25 to 50 wt%, e.g. 25 to 45 wt%.

The content of the vegetable protein in the aqueous suspension is normally in the range of 4 to 30 wt%, calculated on the dry matter of the suspension, such as in the range of 8 to 25 wt%, e.g. 10 to 20 wt%. It is believed that the function of the vegetable protein in the spray-drying is to stabilize the suspension to obtain the maximum degree of homogeneity, thereby yielding a spray-dried product in which the surface-active substance is exposed and readily available to the components of the products in which it is to exert its surface-active properties.

When a carbohydrate is added to the aqueous suspension, the amount added is preferably one which results in a ratio between the carbohydrate and vegetable protein which is in the range of 90:10 to 50:50, such as in the range of 90:10 to 70:30, preferably in the range of 85:15 to 70:30, one example of such a range being 40:60 to 60:40.

The ratio between the carbohydrate and the vegetable protein is preferably balanced between two requirements. One is the requirement of obtaining, with the combination of the carbohydrate and the vegetable protein, an optimum carrier for the surface-active substances yielding a spray-dried product in which the surface-active substance is exposed and readily available as discussed above. The other requirement is to optimize the drying process in the spray-drying tower, i.e. to avoid that the more or less dried aqueous suspension sticks to the walls in the spray-drying tower, thereby reducing the yield of the free-flowing powder.

While a suitable balance between the above-mentioned requirements seems to be favoured by a suitable adjustment of the ratio between the vegetable protein and a carbohydrate, it is contemplated that such a balance could also suitably be favoured by the use of chemically, e.g. enzymatically, modified vegetable proteins or derivatized vegetable proteins having properties which on the one hand function in a "vegetable protein-like manner" to ensure the attainment of the desired exposure and availability of the surface-active substance and on the other hand have properties resembling the properties of the carbohydrates with respect to avoiding reduction of the yield of the free-flowing powder.

When there is no requirement that the product according to the present invention is one which can be tolerated by a person suffering from allergy to milk proteins, milk protein-containing products including liquid milk, milk powders of full fat milk, skim milk, whey or suspended powders derived from milk, e.g. whey protein or sodium caseinate, may for certain uses of the product be incorporated in the aqueous suspension. Thus, it has been found that a powder product containing a surface-active substance which is a whipping or aerating emulsifier, which powder product contains a minor proportion of milk protein in addition to the vegetable protein, e.g. 1-5 wt% of milk protein, calculated on the dry matter of the suspension, may have improved whipping properties compared with a powder product merely containing vegetable protein.

A minor amount of a base may be incorporated in the aqueous suspension. A suitable base is one selected from the group consisting of sodium hydroxide, potassium hydroxide, sodium carbonate and potassium carbonate and inorganic phosphates such as inorganic hexametaphosphates, inorganic diphosphates, inorganic orthophosphates, inorganic triphosphates and inorganic polyphosphates.

The addition of a base and especially addition of a phosphate improves the possibilities of complex-binding proteins in the spray-drying tower and thereby improving the yield of the powder product. The base content may typically be in the range of 0.1 to 10 wt%, calculated on the suspension, preferably in the range of 0.2 to 5 wt%, such as in the range of 0.5 to 2.0 wt%. This will normally correspond to a molar concentration of the base in the range of 0.1 to 1.0 M, preferably in the range of 0.2 to 0.8 M, such as in the range of 0.4 to 0.6 M.

The aqueous suspension to be spray-dried is suitably prepared by suspending, with agitation, the dry matter components in water, and preferably subject the suspension to an emulsification treatment followed by a homogenization treatment.

The selected surface-active substance may have a low melting point and thus be in a liquid form at ambient temperature, or it may have a melting point which is above ambient temperature. When a surface-active substance is used which is not in a liquid form at ambient temperature, it is normally preferred to melt the surface-active substance before it is suspended of the surface-active substance to the aqueous suspension.

As mentioned above, the aqueous suspension is preferably emulsified, i.e. the surface-active substance of the aqueous suspension is dispersed uniformly in the water phase, by recirculation by means of a pumping equipment, such as a gear pump, for a period of time which is normally in the range of 0.5 to 90 minutes, to obtain an aqueous emulsion in which the surface-active substance is present in the form of small particles or globules, thereby conferring the emulsion with a milky appearance. The particles or globules of the emulsion will have diameters which are presumably in the range of about 6-10 µm and will tend to precipitate slowly, within a few hours at ambient temperature.

The emulsified aqueous suspension is preferably homogenized to obtain a system in which the particles or globules are so small, presumably about 1-2 µm, that they will not precipitate until after a period of about 4 to 6 hours at ambient temperature.

The homogenization may be performed by means of a pressure homogenizer, typically at a pressure in the range of 25 to 250 kp/cm², preferably in the range of 50 to 200 kp/cm², more preferably in the range of 60 to 150 kp/cm², most preferably in the range of 70 to 125 kp/cm² and at a temperature in the range of 10 to 100°C, preferably in the range of 20 to 90°C, such as 60-90°C.

When the vegetable protein is derived from beans such as navy beans, whole beans may be used as a single component protein and carbohydrate supply. The beans also contain about 17 wt% of fibres; the fibre content may be advantageous to some uses of the surface-active substance. It is preferred to heat treat the beans mixed with water to decrease the activity of proteinase inhibitors by about 90% and to inactivate the content of lectin before the emulsifying and homogenization process. The heat treatment may be carried out by means of a process tank supplied with a heating mantle and a turbo-wheel. The mixture of beans and water may be heated to 100°C and may be boiled for a period of 12 to 25 minutes such as for a period of 15 minutes.

The aqueous suspension, which has preferably been emulsified and homogenized, is subjected to spray-drying in a spray-drying equipment comprising a spray-tower, for a period of time which is in the range of 5 to 120 seconds, preferably in the range of 10 to 100 seconds, more preferably in the range of 15 to 70 seconds and most preferably in the range of 20 to 50 seconds. The temperature in the spray tower is typically in the range of 75 to 300°C, more preferably in the range of 120 to 250°C and most preferably in the range of 160 to 200°C. In a preferred embodiment, the inlet temperature is in the range of 150 to 250°C, preferably in the range of 175 to 225°C and more preferably in the range 185 to 210°C such as about 190°C, and the outlet temperature in the spray tower is in the range of 50 to 150°C, preferably in the range of 75 to 125°C and more preferably in the range of 85 to 110°C such as about 90°C.

The resulting powder typically consists of smooth and substantially spherical particles many of which are agglomerated in grape-like clusters when viewed under a microscope.

The particle size of the resulting spray-dried powder is normally in the range of 5 to 200 µm, e.g. in the range of 5-100 µm, such as 10-100 µm. When the vegetable protein is derived from leguminous seeds, the particle size of the powder product will often be in the range of 20 to 90 µm, preferably in the range of 40 to 70 µm. In a further preferred embodiment, where the vegetable protein is derived from a cereal, such as wheat, the particle size of the powder product is in the range of 5 to 40 µm, preferably in the range of 10 to 20 µm.

If a desired small particle size of the powder is not obtained by the spray-drying process, the spray-dried powder may be further comminuted e.g. by a milling or a rolling process. It is often preferred to sieve the powder to obtain a fraction with a narrower particle size, e.g. using a vibrating screen. The fraction or fractions outside the desired narrow particle size may be recirculated by incorporation in a suspension to be spray-dried, etc.

The resulting spray-dried free-flowing powder has a water content at the most 6 wt%, preferably at the most 4 wt%, and will contain the surface-active substance and the vegetable protein in a ratio which is dependent on the ratio in which they were incorporated in the suspension, normally in the range of 90:10 to 70:30, preferably in the range of 85:15 to 70:30.

While the food-improving surface-active substances can have many functions, in particular as emulsifiers, such as described above, one property possessed by many interesting surface-active substances for use in, e.g., bakery products, is a property as a whipping or aerating emulsifier, such as described above. One of the features of the present invention is that it has been found possible to spray-dry such whipping or aerating emulsifiers with substantial retainment of their whipping properties, in spite of the fact that the milk carrier has been replaced with a vegetable protein. This may be taken as a general indication of retainment of also the other above-mentioned valuable emulsifier functions in the spray-drying process of the invention.

In one interesting embodiment, the free-flowing powder is one containing a surface-active substance which is a whipping (aerating) emulsifier, and the product, when tested in the Whipping Test as defined herein, results in a specific volume after 8 minutes of whipping which is at the most 500 g/l such as 450 g/l, preferably at the most 430 g/l, more preferably at the most 410 g/l and most preferably at the most 390 g/l and in particular at the most 370 g/l such as at the most 350 g/l. Advantageously, the specific volume after 4 minutes of whipping is at the most 500 g/l, such as at the most 470 g/l, preferably at the most 450 g/l, more preferably at the most 430 g/l, most preferably at the most 410 g/l and in particular at the most 390 g/l.

The free-flowing powder of the invention may be used in the same manner as known food-improving substances, such as known emulsifiers, for the same purposes. Thus, e.g., it may be added to the products or mixtures to be improved, e.g. emulsified or aerated, in an amount which is normally in the range of 0.1 to 5 wt%, calculated on the food product, typically 0.2 to 3 wt%.

The invention also relates to a food product made with the powder product. The food product of the invention may be in a state in which the presence of the particles of the powder can still be ascertained as such, e.g. a dry cake mix, or it may be a processed food product in which the product has exerted its activity, e.g. a baked bread or cake, such as a sponge cake or a Swiss roll.

In various specific embodiments, food products in which the product is used may comprise at least one food ingredient such as a sweetening agent, a fat-containing ingredient, a cereal ingredient, nuts, a dietary fibre-containing ingredient selected from a vegetable, a fruit and seeds. More specifically, suitable food ingredients may be selected from sweetening agents including sugars and synthetic sweetening agents such as aspartame and cyclamates; fat-containing ingredients including butter, margarine, shortenings, vegetable oils and fats and animal oils such as oil derived from marine animals; cereal ingredients, e.g. flours, starches and bran products; tuber-derived ingredients including starches; nuts, e.g. walnuts, almonds, hazelnuts or peanuts; and dietary fibre-containing ingredients selected from vegetables, fruits and seeds.

Furthermore, the food product may comprise at least one further food-improving additive which may be an acid, a base, a salt, an emulsifier, a stabilizing agent, a thickening agent, a preserving agent, an antioxidizing agent, an anticaking agent, a colouring agent, or a flavouring enhancer or modifier.

The invention is illustrated further in the following examples:

### MATERIALS AND METHODS

### Surface-active Mixture A

A mixture of

| | parts by weight |
|---|---|
| Palsgaard® 1032: edible fatty acid partial diglycerol ester* | 53.6 |
| Palsgaard® 0404: glycerol monoester of an edible fatty acid further monoesterified with lactic acid | 31.2 |
| Palsgaard® 3502: monomeric glycerol monoesterified with an edible fatty acid and further monoesterified with diacetyl tartaric acid ** | 9.0 |
| Palsgaard® 0090: monoester of glycerol with fully hardened tallow fatty acids, content of monoester above 90% | 6.1 |

| | |
|---|---|
| * contains a minor amount of partial ester of monomeric glycerol. The product has an acid value between 0 and 8 and a saponification value between 130 and 145. | |
| ** the product has an acid value of 85-110 and a saponification value between 485 and 520. | |

### Surface-active Mixture B

A mixture of

| | parts by weight |
|---|---|
| Palsgaard® 1028: glycerol and polyglycerol (15% monomeric glycerol, 60% diglycerol and 25% higher glycerol condensates) esterified with a mixture of palmitic and lauric acid * | 59.6 |
| Palsgaard® 0404 | 31.2 |
| Palsgaard® 3502 | 9.0 |

| | |
|---|---|
| * the product has an acid value between 0 and 3 and a saponification value between 125 and 140. | |

### Surface-active Mixture C

A mixture of

| | parts by weight |
|---|---|
| Palsgaard® 1028 | 84 |
| Palsgaard® 0404 | 44 |
| Palsgaard® 3502 | 13 |

Among the above Palsgaard® products, Palsgaard® 0090, Palsgaard® 0404, Palsgaard® 1028 and Palsgaard® 1032 are whipping emulsifiers.

### Palm kernel fat, PW 35

Hardened palm kernel fat with a melting point between 33-36°C and a saponification value of about 250. The content of fatty acid is a mixture of about 6 wt% C8, 5 wt% C10, 45 wt% C12, 12 wt% C14, 8 wt% C16, 15 wt% C18 and 7 wt% C18:1.

### Skimmed milk powder, Milex

A skim milk powder containing 1 wt% milk fat, in average 37 wt% milk protein, 50 wt% lactose, 8 wt% minerals, and max. 4 wt% moisture. pH (in a 10 wt% solution): 6.65 in average.

### Cream Pre-Mix

| | |
|---|---|
| Sugar | 50.8 wt% |
| Pre-gelatinized starch | 26.5 wt% |
| Filled milk* | 19.5 wt% |
| Alginate | 1.9 wt% |
| Sodium tetrapyrophosphate | 0.3 wt% |
| Aroma | 0.6 wt% |
| Sodium chloride | 0.3 wt% |

| | |
|---|---|
| * Filled milk is a spray-dried product containing skim milk powder and hardened palm kernel fat, PW 35, in the ratio 78:22. | |

### Determination of viscosity

A portion of 500 g of the emulsion to be spray-dried is adjusted to 70°C, and the viscosity is measured by means of a Brookfield viscometer using an appropriate spindle* at 20 rpm.
* Spindle no. 3 is used in the range of 500 to 4500 cps and spindle no. 4 is used in the range of 1000 to 8000 cps.

### Whipping Test

Determination of the performance of a powder product as a whipping emulsifier in a sponge cake batter.

The sponge cake batter is prepared from the following ingredients:
- 400 g: granulated sugar
- 318 g: wheat flour
- 200 g: wheat starch
- 28 g: baking powder
- 500 g: whole egg
- 200 g: water
- 2 g: sodium chloride
- 52 g: of the powder product to be tested
The sponge cake batter is whipped by means of a Hobart™ A200 mixer, whipping in the 3rd gear for 4 and 8 minutes, respectively. The whipping performance of the powder product is measured as the specific volume (in g/litre) of the sponge cake batter whipped in this manner.

### Reference powder product

As a reference powder product with which the powder product according to the invention can be prepared, a spray-dried powder was made in the conventional manner using skim milk powder as a carrier. The homogenized emulsion subjected to the spray-drying was made from the following recipe:

| | |
|---|---|
| Surface-active mixture A | 14 wt% |
| Skim milk powder | 29 wt% |
| Water | 57 wt%. |

The above-mentioned ingredients were mixed and the resulting mixture was emulsified by recirculation by means of a gear pump at a counter pressure of 2 kp/cm² for 6-7 minutes. The emulsified mixture was homogenized by means of a homogenizer (type Rannie, a one-step homogenizer from Rannie A/S, Copenhagen) at a temperature of 75°C and a homogenizing pressure of 75 kp/cm². The emulsified, homogenized mixture which had a temperature of 75°C was transferred to a spray-drying tower (Anhydro Compact, type 3.58.50.01 with a centrifugal atomizer and an atomizing velocity of 25000 rpm) and spray-dried at an inlet air temperature of about 190°C and an outlet air temperature of about 90°C.

The powder product was sieved by means of a vibrating screen (type Allgauer) supplied with a 16 mesh screen and subjected to the Whipping Test. A range of typical results appear from Table I below:

**TABLE I**

| Whipping time | 4 minutes | 8 minutes |
|---|---|---|
| specific volume (g/l) | 390-430 | 350-390 |

These figures are reasonable comparison figures when evaluating the results of samples from Example 20 below.

Furthermore, an identical, but non-sieved powder product was subjected to the Whipping Test. Typical results appear from Table II below. These figures are reasonable comparison figures when evaluating the results of samples from Example 1-19.

**TABLE II**

| Whipping time | 4 minutes | 8 minutes |
|---|---|---|
| specific volume (g/l) | 400 +/-30 | 390 +/-30 |

### Amypro® SWP (soluble wheat protein)

A soluble wheat protein having a protein content of 85 wt%, a fat content of 6 wt%, determined through a 4 hours extraction by means of CHCl₃-methanol (2:1), an ash content of 5 wt% and a carbohydrate content of 4 wt%, all calculated on dry matter. The nitrogen solubility index of the protein is more than 90% at pH below 3 and above 5 (the nitrogen solubility index is the percentage ratio between nitrogen content in supernatant and total nitrogen content determined by stirring a 1% protein solution for 30 minutes, adjusting the pH to 6, and centrifuging the solution at 5000 g for 20 minutes).

### Pea Protein Isolate

A high viscous protein isolate made from dehulled peas. Contains 86 wt% protein in dry matter, 2 wt% carbohydrates, 3 wt% fat (AOAC, 13th ed. 7.056) and 4 wt% ash, and a moisture content of 5 wt%. pH of a 10 % suspension: approximately 7.5. Nitrogen solubility index, pH 7: at least 60.

### Variolac 83 (carbohydrate source)

A spray-dried whey permeate powder.
Lactose monohydrate content: at least 83.0 wt%,
protein content: 4.0 wt% +/- 1.0 wt%,
mineral content: 8.0 wt% +/2.0 wt%,
moisture content: 3.0 wt% as a maximum,
pH: 5.6 to 6.0 in a 10% solution.

### Flavolin (carbohydrate source)

A whey powder comprising 1.5 wt% fat and 4.0 wt% moisture as a maximum, and in average 13 wt% milk protein, 71 wt% lactose, and 8.0 wt% minerals. pH (in a 10 % solution): 6.1.

### EXAMPLE 1

650 g Pea Protein Isolate and 2200 g maltodextrin were suspended in water under stirring at a temperature of 55°C. 1400 g of Surface-active Mixture A was melted at a temperature of 80°C. The molten Surface-active Mixture A was added to the suspension of Pea Protein Isolate and maltodextrin. Furthermore, 50 g 33 wt% sodium hydroxide and 5700 g water were added. The resulting mixture was emulsified by recirculation by means of a gear pump at a counter pressure of 2 kp/cm² for 6-7 minutes. The emulsified mixture was homogenized by means of a homogenizer (type Rannie, a one-step homogenizer from Rannie A/S, Copenhagen) at a temperature of 75°C and a homogenizing pressure of 75 kp/cm². The emulsified, homogenized mixture which had a temperature of 75°C was transferred to a spray-drying tower (Anhydro Compact, type 3.58.50.01 with a centrifugal atomizer and an atomizing velocity of 25000 rpm) and spray-dried at an inlet air temperature of about 190°C and an outlet air temperature of about 90°C. The resulting powder product had a temperature of 45°C at the outlet.

The powder product was subjected to the Whipping Test. The results appear from the following Table III:

**TABLE III**

| Whipping time | 4 minutes | 8 minutes |
|---|---|---|
| specific volume (g/l) | 422 | 405 |

### EXAMPLE 2

A powder product was prepared as described in Example 1 using the following ingredients in the preparation of the emulsion subjected to spray-drying:

| | |
|---|---|
| Surface-active Substance A | 14 wt% |
| Pea Protein Isolate | 4 wt% |
| Whey powder | 24 wt% |
| Sodium caseinate | 1 wt% |
| Water | 57 wt% |

The powder product was subjected to the Whipping Test. The results appear from the following Table IV:

**TABLE IV**

| Whipping time | 4 minutes | 8 minutes |
|---|---|---|
| specific volume (g/l) | 374 | 380 |

### EXAMPLE 3

A powder product was prepared as described in Example 1 using the following ingredients in the preparation of the emulsion subjected to spray-drying:

| | |
|---|---|
| Surface-active Mixture A | 14.0 wt% |
| Pea Protein Isolate | 4.5 wt% |
| Whey powder | 24.5 wt% |
| Water | 57.0 wt% |

The powder product was subjected to the Whipping Test. The results appear from the following Table V:

**TABLE V**

| Whipping time | 4 minutes | 8 minutes |
|---|---|---|
| specific volume (g/l) | 397 | 384 |

### EXAMPLE 4

A powder product was prepared as described in Example 1 using the following ingredients in the preparation of the emulsion subjected to spray-drying:

| | |
|---|---|
| Surface-active Mixture A | 15.0 wt% |
| Pea Protein Isolate | 4.5 wt% |
| Whey powder | 24.0 wt% |
| Maltodextrin | 1.0 wt% |
| 33 wt% NaOH | 0.5 wt% |
| Water | 55.0 wt% |

The powder product was subjected to the Whipping Test. The results appear from the following Table VI:

**TABLE VI**

| Whipping time | 4 minutes | 8 minutes |
|---|---|---|
| specific volume (g/l) | 404 | 373 |

In the following Examples 5-16, the viscosity of the emulsion to be spray-dried was adjusted so that it did not exceed 4000 cps, as measured by means of a Brookfield viscometer on the emulsified, homogenized mixture just before transferring the mixture to the spray tower.

### EXAMPLE 5

This example illustrates the effect on whipping performance resulting from using varying ratios between the protein and the carbohydrate.

A powder product was prepared substantially as described in Example 1 using the following ingredients in addition to the water:
Surface-active Mixture B, 32.7 wt%,
Amypro® SWP in an amount varying from 9.7 wt% to 15.6 wt%,
Variolac 83 in an amount varying from 57 wt% to 51.2 wt%,
sodium hydroxide 100%, 0.5 wt%.

The powder products prepared were subjected to the Whipping Test. The specific volumes, in g/litre, measured at the various ratios between the protein and the carbohydrate, appear from the following table VII:

**TABLE VII**

| Amypro®, wt% | Variolac, wt% | Specific volume at whipping time 4 min, g/l | Specific volume at whipping time 8 min, g/l |
|---|---|---|---|
| 9.7 | 57.0 | 415 | 421 |
| 10.9 | 55.8 | 436 | 440 |
| 12.1 | 54.7 | 426 | 432 |
| 13.3 | 53.5 | 465 | 457 |
| 14.4 | 52.3 | 459 | 458 |
| 15.6 | 51.2 | 432 | 436 |

The yield of the spray-dried powder product was decreased (some of the emulsion sticking to the spray tower) in the two first experiments where the protein content was below about 12 wt%. Thus, the most satisfactory results were obtained at an Amypro® content of 12.1 wt%.

The following Examples 6-11 illustrate the effect on whipping performance resulting from the use of varying ratios between the content of the surface-active substances (varying from 32.7 wt% to 42.6 wt% of the dry matter content) and the content of carrier components (varying from 66.8 wt% to 57.0 wt% of the dry matter content).

### EXAMPLE 6

A powder product was prepared as described in Example 1 using the following ingredients in addition to the water:

| | |
|---|---|
| Palsgaard® 1028 | 19,5 wt% |
| Palsgaard® 0404 | 10.2 wt% |
| Palsgaard® 3502 | 3.0 wt% |
| Amypro® SWP | 12.1 wt% |
| Variolac 83 | 54.7 wt% |
| sodium hydroxide (33%) | 0.5 wt% |

The resulting powder product was subjected to the Whipping Test. The results appear from Table VIII below:

**TABLE VIII**

| Whipping time | 4 minutes | 8 minutes |
|---|---|---|
| specific volume (g/l) | 426 | 432 |

### EXAMPLE 7

A powder product was prepared as described in Example 1 using the following ingredients in addition to the water:

| | |
|---|---|
| Palsgaard® 1028 | 20.8 wt% |
| Palsgaard® 0404 | 10.8 wt% |
| Palsgaard® 3502 | 3.2 wt% |
| Amypro® SWP | 11.7 wt% |
| Variolac 83 | 53.0 wt% |
| sodium hydroxide (33%) | 0.5 wt% |

The resulting powder product was subjected to the Whipping Test. The results appear from Table IX below:

**TABLE IX**

| Whipping time | 4 minutes | 8 minutes |
|---|---|---|
| specific volume (g/l) | 444 | 440 |

### EXAMPLE 8

A powder product was prepared as described in Example 1 using the following ingredients in addition to the water:

| | |
|---|---|
| Palsgaard® 1028 | 22.0 wt% |
| Palsgaard® 0404 | 11.5 wt% |
| Palsgaard® 3502 | 3.5 wt% |
| Amypro® SWP | 11.3 wt% |
| Variolac 83 | 51.2 wt% |
| sodium hydroxide (33%) | 0.5 wt% |

The resulting powder product was subjected to the Whipping Test. The results appear from Table X below:

**TABLE X**

| Whipping time | 4 minutes | 8 minutes |
|---|---|---|
| specific volume (g/l) | 425 | 425 |

### EXAMPLE 9

A powder product was prepared as described in Example 1 using the following ingredients in addition to the water:

| | |
|---|---|
| Palsgaard® 1028 | 23.9 wt% |
| Palsgaard® 0404 | 12.4 wt% |
| Palsgaard® 3502 | 3.7 wt% |
| Amypro® SWP | 10.8 wt% |
| Variolac 83 | 48.8 wt% |
| sodium hydroxide (33%) | 0.4 wt% |

The resulting powder product was subjected to the Whipping Test. The results appear from Table XI below:

**TABLE XI**

| Whipping time | 4 minutes | 8 minutes |
|---|---|---|
| specific volume (g/l) | 436 | 432 |

### EXAMPLE 10

A powder product was prepared as described in Example 1 using the following ingredients in addition to the water:

| | |
|---|---|
| Palsgaard® 1028 | 25.3 wt% |
| Palsgaard® 0404 | 13.3 wt% |
| Palsgaard® 3502 | 4.0 wt% |
| Amypro® SWP | 10.3 wt% |
| Variolac 83 | 46.7 wt% |
| sodium hydroxide (33%) | 0.4 wt% |

The resulting powder product was subjected to the Whipping Test. The results appear from Table XII below:

**TABLE XII**

| Whipping time | 4 minutes | 8 minutes |
|---|---|---|
| specific volume (g/l) | 420 | 420 |

### EXAMPLE 11

A powder product was prepared as described in Example 1 using the following ingredients in addition to the water:

| | |
|---|---|
| Palsgaard® 1028 | 25.3 wt% |
| Palsgaard® 0404 | 13.3 wt% |
| Palsgaard® 3502 | 4.0 wt% |
| Amypro® SWP | 13.3 wt% |
| Variolac 83 | 43.7 wt% |
| sodium hydroxide (33%) | 0.4 wt% |

The resulting powder product was subjected to the Whipping Test. The results appear from Table XIII below:

**TABLE XIII**

| Whipping time | 4 minutes | 8 minutes |
|---|---|---|
| specific volume (g/l) | 424 | 429 |

The results of Examples 6-11 show that the whipping performance is more or less the same for the different ratios. However, slightly better yields were obtained at the ratios of Examples 6-8 than at the ratios used in Examples 9, 10 and 11.

The following Examples 12-15 illustrate the effect on whipping performance resulting from the use of varying ratios between the content of the protein, the content of the surface-active substances and the content of carbohydrate.

### EXAMPLE 12

A powder product was prepared as described in Example 1 using the following ingredients in addition to the water:

| | |
|---|---|
| Palsgaard® 1028 | 25.2 wt% |
| Palsgaard® 0404 | 13.3 wt% |
| Palsgaard® 3502 | 4.0 wt% |
| Amypro® SWP | 8.3 wt% |
| Variolac 83 | 48.7 wt% |
| sodium hydroxide (100%) | 0.4 wt% |

The resulting powder product was subjected to the Whipping Test. The results appear from Table XIV below:

**TABLE XIV**

| Whipping time | 4 minutes | 8 minutes |
|---|---|---|
| specific volume (g/l) | 443 | 424 |

### EXAMPLE 13

A powder product was prepared as described in Example 1 using the following ingredients in addition to the water:

| | |
|---|---|
| Palsgaard® 1028 | 26.8 wt% |
| Palsgaard® 0404 | 9.3 wt% |
| Palsgaard® 3502 | 2.7 wt% |
| Amypro® SWP | 7.8 wt% |
| Variolac 83 | 52.9 wt% |
| sodium hydroxide (100%) | 0.5 wt% |

The resulting powder product was subjected to the Whipping Test. The results appear from Table XV below:

**TABLE XV**

| Whipping time | 4 minutes | 8 minutes |
|---|---|---|
| specific volume (g/l) | 413 | 408 |

### EXAMPLE 14

A powder product was prepared as described in Example 1 using the following ingredients in addition to the water:

| | |
|---|---|
| Palsgaard® 1028 | 26.8 wt% |
| Palsgaard® 0404 | 9.3 wt% |
| Palsgaard® 3502 | 2.7 wt% |
| Amypro® SWP | 6.8 wt% |
| Variolac 83 | 53.9 wt% |
| sodium hydroxide (100%) | 0.5 wt% |

The resulting powder product was subjected to the Whipping Test. The results appear from Table XVI below:

**TABLE XVI**

| Whipping time | 4 minutes | 8 minutes |
|---|---|---|
| specific volume (g/l) | 431 | 413 |

### EXAMPLE 15

A powder product was prepared as described in Example 1 using the following ingredients in addition to the water:

| | |
|---|---|
| Palsgaard® 1028 | 27.0 wt% |
| Palsgaard® 0404 | 9.3 wt% |
| Palsgaard® 3502 | 2.8 wt% |
| Amypro® SWP | 5.3 wt% |
| Variolac 83 | 55.2 wt% |
| sodium hydroxide (100%) | 0.4 wt% |

The resulting powder product was subjected to the Whipping Test. The results appear from Table XVII below:

**TABLE XVII**

| Whipping time | 4 minutes | 8 minutes |
|---|---|---|
| specific volume (g/l) | 407 | 383 |

The results of Examples 12 to 15 indicate that in these pilot tests, the whipping performance is good at low concentrations of the vegetable protein.

### EXAMPLE 16

A powder product gas prepared as described in Example 1 using the following ingredients in addition to the water:

Surface-active Mixture C in an amount of 141 parts by weight,
Amypro® SWP in an amount varying from 0 to 65 parts by weight,
Carbohydrate in an amount varying from 222 to 287 parts by weight,
Bases in an amount from 0 to 10 parts by weight.

The powder products prepared were subjected to the Whipping Test. The specific volumes, in g/litre, measured at the various ratios between the protein, the carbohydrate, and the base after 1 day storage appear from the following table XVIII:

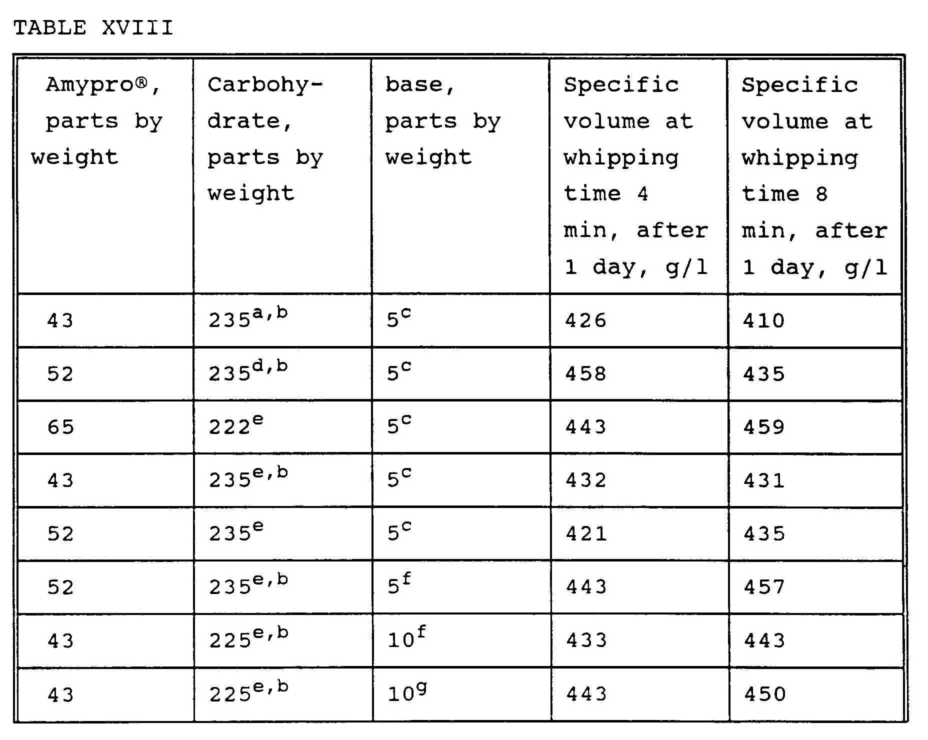

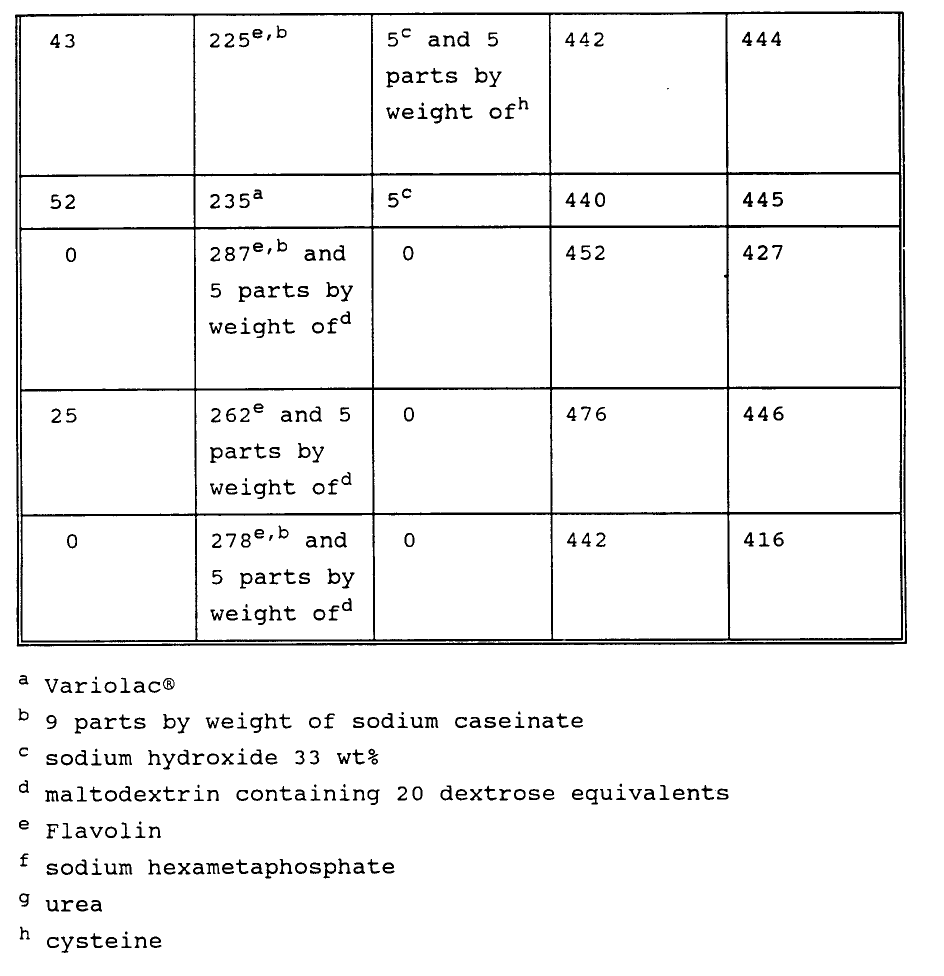

The specific volumes, in g/litre, measured at the various ratios between the protein, the carbohydrate, and the base after 90 days storage appear from the following table XIX:

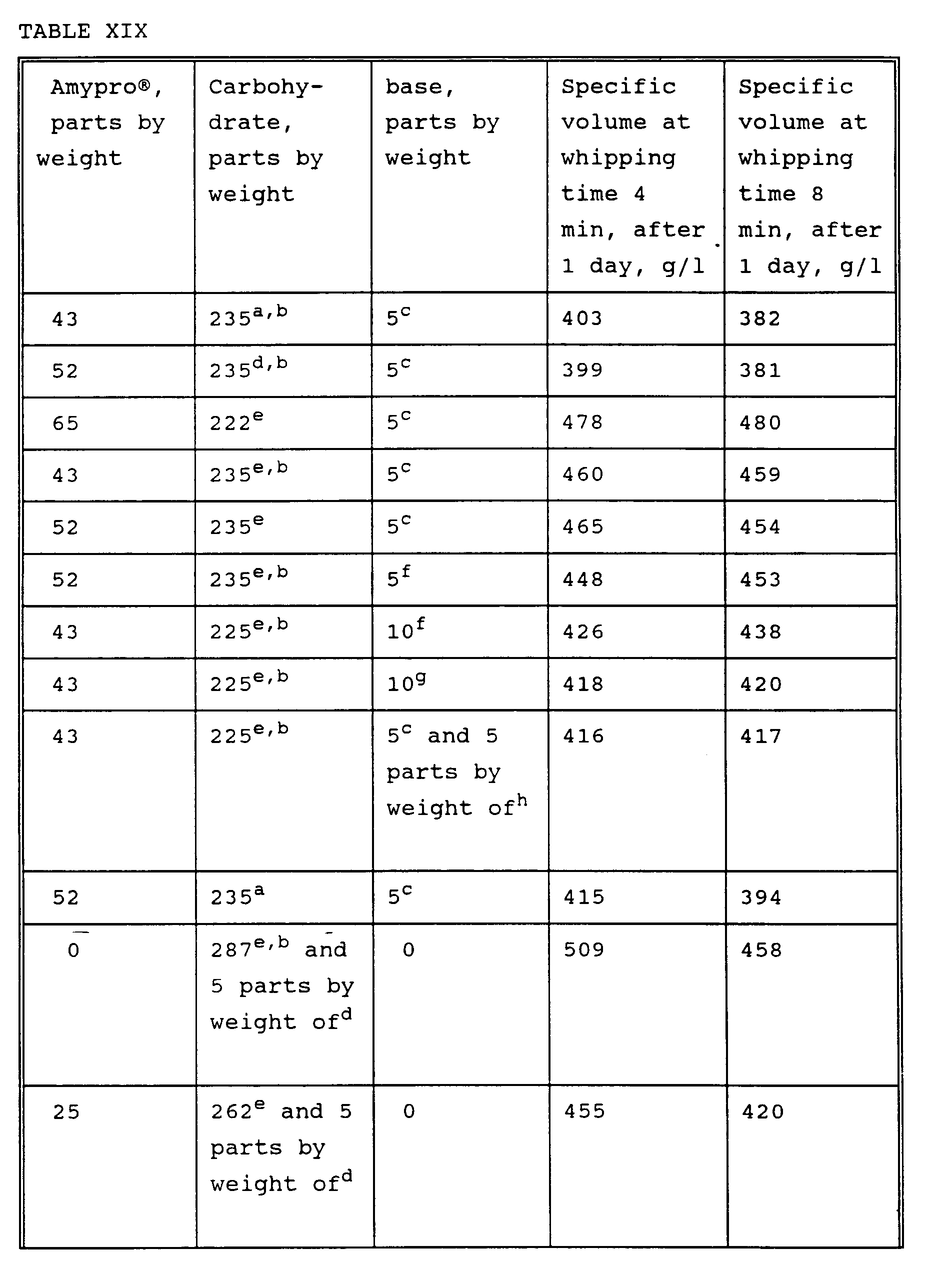

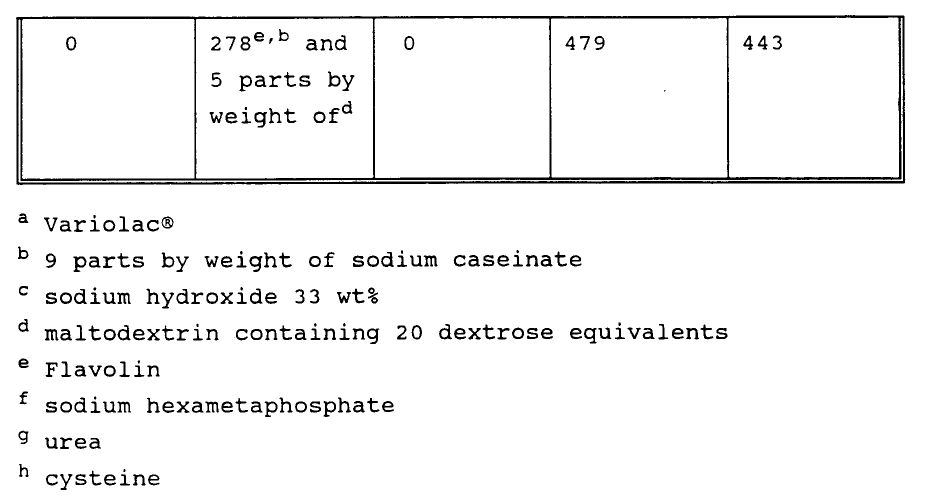

The specific volumes, in g/litre, measured at the various ratios between the protein, the carbohydrate, and the base after 180 days storage appear from the following table XX:

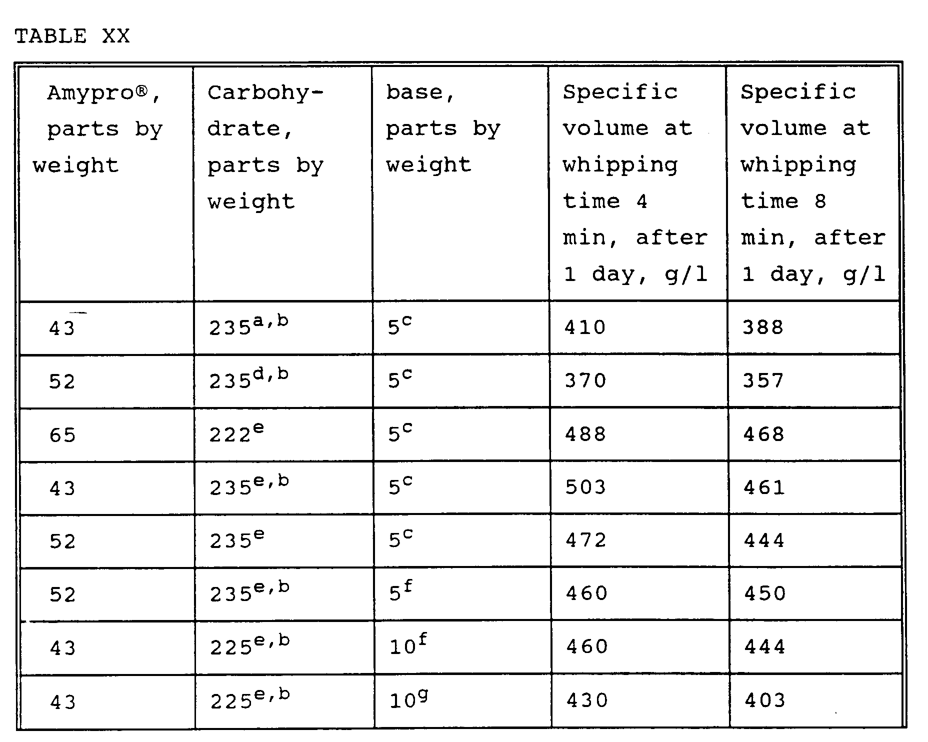

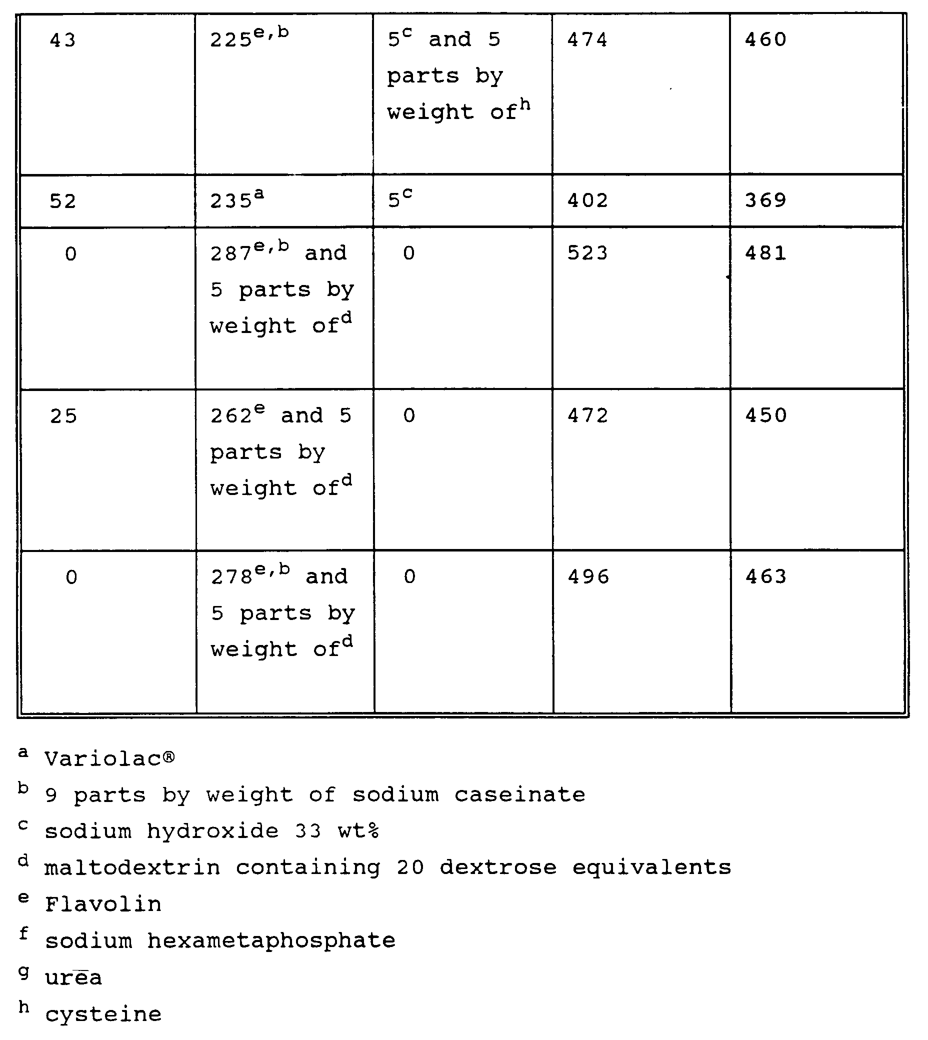

### EXAMPLE 17

10 kg of rinsed navy beans (Phaseolus Vulgaris L) with a length of 8-12 mm, a diameter of 1-6 mm, a water content of 11.5 wt%, a protein content of 21.3 wt%, a fat content of 1.6 wt%, a carbohydrate content of 47.8 wt%, a content of total dietary fibres of 17.0 wt% and a mineral content of 4.0 wt% (ref: Sourci, Hartmann and Kraut, Nährwert Tabelle, 1989/90) were mixed with 35 kg water at 60°C in a mixing process tank, SRB 50 from Scanima A/S, supplied with a heating mantle and a turbo-wheel. The mixture of navy beans and water was heated to 85°C by means of a steam supply in the heating mantle of the process tank under stirring. When the temperature was 85°C the turbo-wheel of the process tank was started at high speed and the steam supply was cut off. The temperature of the mixture of water and beans was increased to 100°C and the mixture was boiled at that temperature for 15 minutes whereby the content of lectin was inactivated and the activity of proteinase inhibitors was decreased by about 90% (ref: S. S. Deshpande, Critical Reviews in Food Science and Nutrition, vol. 32(4), pages 333-363, 1992). After boiling of the mixture of beans and water, the bean mixture was filled into containers and stored at -18°C until further use.

4328 g bean mixture was thawed and suspended under stirring and circulation pumping in 4860 g water in a mixing tank. The aqueous suspended bean mixture was heated to 50°C. 1313 g of Surface-active Mixture B was melted in a melting tank with a heating mantle for steam supplying at a temperature of 80°C. The molten Surface-active Mixture B was added to the aqueous suspension of bean mixture in the mixing tank. This mixture having a content of surface-active substances of 12.5 wt%, a content of bean mixture of 46.3 wt% (12.5 wt% dry matter and 33.8 wt% water) and 41.2 wt% water was emulsified by recirculation by means of a pump (Stork SRTR 50 BGN) at a counter pressure of 2 kp/cm² in 6-7 minutes at 50°C. The emulsified mixture was homogenized by means of a homogenizer (type Rannie, a one-step homogenizer, from Rannie A/S, Copenhagen) at a temperature of 50°C and a homogenizing pressure of 75 kp/m². The emulsified, homogenized mixture which had been heated to 75°C was transferred to and spray-dried in a spray-drying tower (Anhydro Compact, type 3.58.50.01 with a centrifugal atomizer and an atomizing velocity of 25000 rpm) in which the inlet air temperature was about 190°C and the outlet air temperature was about 90°C. The resulting powder product had a temperature of 35-40°C at the outlet.

The powder product was subjected to the Whipping Test with the difference that 37 g of the powder product with a ratio of carrier:surface-active substance at 50:50 was used. Typical results are in the range shown in Table XXI below:

**TABLE XXI**

| Whipping time | 4 minutes | 8 minutes |
|---|---|---|
| specific volume (g/l) | 390-408 | 380-390 |

The results obtained are on the same level as the results obtained with the reference product.

### EXAMPLE 18

A powder product was prepared substantially as described in Example 17 with the difference that 6570 g bean mixture, 2386 g water and 1544 g of Surface-active Mixture B were used and this mixture having a content of surface-active substances of 14.7 wt%, a content of bean mixture of 62.6 wt% (13.8 wt% dry matter and 48.8 wt% water) and 22.7 wt% water was added an amount of Fungamyl 180S (Fungal alpha-amylase obtained from a selected strain of Aspergillus oryzae, the amylase having the systematic name 1,4-α-D-glucan glucano-hydrolase (EC 3.2.1.1)), corresponding to 0.1 wt% of the above-mentioned mixture, under stirring and recirculation in 4 minutes before the spray-drying process.

The viscosity was measured by means of a Brookfield viscometer at the emulsified, homogenized mixture at a temperature of 66°C before transferring to the spray-drying tower. The viscosity is shown in Table XXII below:

**TABLE XXII**

| | |
|---|---|
| viscosity without treatment by enzyme | 7000 cps |
| viscosity after treatment by enzyme | 3000 cps |

The viscosity of the enzyme-treated emulsified, homogenized mixture was a suitable viscosity for handling an aqueous homogenized emulsion in the spray tower and a viscosity of 7000 cps was difficult to handle in the spray tower.

The enzyme-treated powder product was subjected to the Whipping Test with the difference that the powder product had a ratio of carrier:surface-active substance at 48:52 and the exact amount was 37 g. No effect of the enzyme-treatment was observed on the resulting specific volume.

### EXAMPLE 19

Powder products with navy beans as carrier were prepared as defined in Example 17 and according to the ratios of surface-active mixture and carrier as shown in Table XXIII below:

**TABLE XXIII**

| Samples | Surface-active substance wt% | Carrier wt% |
|---|---|---|
| Sample C | 36 | 64 |
| Sample D | 46 | 54 |
| Sample E | 56 | 44 |

The powder products were subjected to the Whipping Test with the difference that the amount in the sponge cake batter of the surface-active substance was 1.9 wt% and 2.4 wt%, respectively. The results for 1.9 wt% and 2.4 wt% surface-active substance, respectively, in the sponge cake batter are shown in Tables XXIV and XXV below:

**TABLE XXIV**

| 1.9 wt% surface-active substance* | Sample C | Sample D | Sample E |
|---|---|---|---|
| Specific volume (g/l) after 4 min. | 420 | 405 | 391 |
| Specific volume (g/l) after 8 min. | 403 | 383 | 367 |

| | | | |
|---|---|---|---|
| * The exact amount of the powder product was 52 g, 40 g and 33 g in sample C, D, and E, respectively. | | | |

**TABLE XXV**

| 2.4 wt% surface-active substance* | Sample C | Sample D | Sample E |
|---|---|---|---|
| Specific volume (g/l) after 4 min. | 389 | 358 | 368 |
| Specific volume (g/l) after 8 min. | 390 | 357 | 342 |

| | | | |
|---|---|---|---|
| * The exact amount of the powder product was 67 g, 52 g and 42 g in sample C, D, and E, respectively. | | | |

The values for specific volume were on the same level or better compared to values obtained with the reference product containing Surface Mixture A.

### EXAMPLE 20

700 kg bean mixture was thawed and suspended under stirring and circulation pumping in 700 kg water in a mixing tank. The aqueous suspended bean mixture was heated to 50°C by means of a plate-type heat exchanger. 187 kg of Surface-active Mixture B was melted in a melting tank with a heating mantle with steam supply at a temperature of 80°C. The molten surface-active substance mixture was added to the aqueous suspension of bean mixture in the mixing tank. This mixture having a content of surface-active substances of 11.8 wt%, a content of bean mixture of 44.1 wt% (9.3 wt% dry matter and 34.8 wt% water) and 44.1 wt% water was emulsified by recirculation by means of a gear pump in 80 minutes at 50°C. The emulsified mixture was heated to a temperature of 72°C and homogenized by means of a homogenizer (type Rannie, a one-step homogenizer, from Rannie A/S, Copenhagen) at a temperature of 70-74°C and a homogenizing pressure of 75 kp/m². The emulsified, homogenized mixture was transferred to and spray-dried in a spray-drying tower (APV Anhydro type 2 with a centrifugal atomizer and an atomizing velocity of 25000 rpm) in which the inlet air temperature was about 200°C and the outlet air temperature was about 85°C. The resulting powder product had a temperature of 35-40°C at the outlet.

The powder product was subjected to the Whipping Test with the difference that 37 g of the powder product with a ratio of carrier:surface-active substance at 44:56 was used. The results are shown in Table XXVI below:

**TABLE XXVI**

| Whipping time | 4 minutes | 8 minutes |
|---|---|---|
| specific volume (g/l) | 448 | 399 |

### EXAMPLE 21

223 kg Variolac 83, 39.3 kg Amypro® SWP and 375 kg water were mixed in a mixing tank under circulation pumping conditions and the suspended mixture was heated to 70°C by means of a plate-type heat exchanger. 3.7 kg of a mixture of a surface-active mixture containing of citric acid ester of monoglycerol and 109 kg palm kernel fat, PW 35, were melted in a melting tank with a heating mantle with steam supply at a temperature of 80°C. The mixture of molten surface-active substance and palm kernel fat was added to the aqueous suspended mixture in the mixing tank. The obtained mixture was emulsified by recirculation by means of a gear pump in 10 minutes. The emulsified mixture with a temperature of 60-70°C was transferred to and spray-dried in a spray-drying tower (APV Anhydro type 2 with a centrifugal atomizer and an atomizing velocity of 25000 rpm) in which the inlet air temperature was about 200°C and the outlet air temperature was about 85°C. The resulting powder product had a temperature of 35-40°C at the outlet.

The powder product was subjected to the Whipping Test with the difference that the whipped product was a cream mixture comprising 16 g of the powder product, 159 g Cream Pre-Mix and 500 g water, and a reference product was prepared following the same recipe with the difference that the reference product contained a powder product comprising spray-dried milk, Milex, as a carrier. Furthermore, the whipping was carried out by means of a Hobart™ A200 mixer, whipping in the 3rd gear for 1 minute and in the 2. gear for 2 minutes. Colour, sensoric quality, consistency and baking of the cream were compared to the reference product. No differences were observed.

## Claims

1. A method for preparing a powder containing a food-improving surface-active substance selected from organic esters of lipid nature, comprising spray-drying an aqueous suspension containing the surface-active substance and a vegetable protein to obtain a free-flowing powder having a water content which is at the most 6 wt%.

2. A method according to claim 1, wherein the aqueous suspension is an aqueous emulsion.

3. A method according to claim 2, wherein the aqueous emulsion is a homogenized aqueous emulsion.

4. A method according to claim 1, 2 or 3, wherein the individual particles of the resulting powder have a size in the range of 5-100 µm, such as 10-100 µm.

5. A method according to any of the preceding claims, wherein the surface-active substance is selected from the group consisting of partial esters of polyhydric alcohols such as ethylene glycol, glycerol and propylene glycol, condensates of propylene glycol, condensates of ethylene glycol, condensates of glycerol, sugars, e.g. sucrose and sorbitols, with-acids selected from edible fatty acids, lactic acid, citric acid, malic acid, succinic acid, tartaric acid and acetic acid.

6. A method according to any of the preceding claims, wherein the aqueous suspension additionally contains a carbohydrate.

7. A method according to claim 6, wherein the carbohydrate is a disaccharide, e.g. lactose or an oligosaccharide, e.g. maltodextrin.

8. A method according to any of the preceding claims, wherein the water content in the aqueous suspension is in the range of 40 to 80 wt%, such as in the range of 40 to 70 wt%, such as in the range of 40 to 60 wt%, calculated on the weight of the total suspension.

9. A method according to claim 1, wherein the content of the vegetable protein is in the range of 4 to 30 wt%; calculated on the dry matter of the suspension, preferably in the range of 8 to 25 wt%, such as in the range of 10 to 20 wt%.

10. A method according to claim 9, wherein the weight ratio between carbohydrate and vegetable protein which is in the range of 90:10 to 50:50, preferably in the range of 90:10 to 70:30.

11. A method according to claim 1 wherein the aqueous suspension additionally contains a base.

12. A method according to any of the preceding claims, wherein the vegetable protein is derived from leguminous seeds selected from peas, soybeans, navy beans and lupines.

13. A method according to claim 12, wherein the vegetable protein is derived from navy beans.

14. A method according to claim 12 or 13, wherein both the vegetable protein and the carbohydrate are derived from beans such as navy beans, in that a mixture prepared from boiling beans with water is used as a single component protein and carbohydrate supply.

15. A method according to any of claims 1-11, wherein the vegetable protein is derived from a cereal selected from rice, wheat, rye, barley, oat and maize.

16. A method according to claim 15, wherein the vegetable protein is derived from wheat.

17. A method according to claim 12 or 13, wherein the particle size of the resulting powder product is in the range of 20 to 90 µm, preferably in the range of 40 to 70 µm.

18. A method according to claim 15 or 16, wherein the particle size of the resulting powder product is in the range of 5 to 40 µm, preferably in the range of 10 to 20 µm.

19. A method according to claim 12, 13 or 17, wherein the content of the surface-active substance in the aqueous suspension is in the range of 25 to 70 wt%, calculated on the dry matter of the suspension, preferably in the range of 25 to 60 wt%, and more preferably in the range of 35 to 55 wt%.

20. A method according to claim 15, 16, or 18, wherein the content of the surface-active substance in the aqueous suspension is in the range of 25 to 70 wt%, calculated on the dry matter of the suspension, preferably in the range of 25 to 50 wt%, and more preferably in the range of 25 to 45 wt%.

21. A free-flowing powder product having a water content of at the most 6 wt%, consisting of particles, each particle containing 10-80 wt% of a food-improving surface-active substance selected from organic esters of lipid nature, and a vegetable protein, the content of the protein being in the range of 4 to 30 wt%, calculated on the dry matter, preferably in the range of 8 to 25 wt%, such as in the range of 10 to 20-wt%.

22. A product according to claim 21, wherein the individual particles of the powder have a size in the range of 5-100 µm, such as 10-100 µm.

23. A product according to claims 21 or 22, wherein the surface-active substance is selected from the group consisting of partial esters of polyhydric alcohols such as ethylene glycol, glycerol and propylene glycol, condensates of propylene glycol, condensates of ethylene glycol, condensates of glycerol, sugars, e.g. sucrose, and sorbitols, with acids selected from edible fatty acids, lactic acid, citric acid, malic acid, succinic acid, tartaric acid and acetic acid.

24. A product according to any of claims 21-23, wherein the particles additionally contain a carbohydrate.

25. A product according to claim 24, wherein the carbohydrate is a disaccharide, e.g. lactose or an oligosaccharide, e.g. maltodextrin.

26. A product according to claim 24 or 25, wherein the weight ratio between carbohydrate and vegetable protein is in the range of 90:10 to 50:50, preferably in the range of 90:10 to 70:30.

27. A product according to any of claims 21-26, in which the particles contain a base.

28. A product according to any of claims 21-27, wherein the vegetable protein is derived from leguminous seeds selected from peas, soybeans, navy beans and lupines.

29. A product according to claim 28, wherein the vegetable protein is derived from navy beans.

30. A product according to claim 28 or 29, wherein both the vegetable protein and the carbohydrate are derived from beans such as navy beans.

31. A product according to any of claims 21-27, wherein the vegetable protein is derived from a cereal selected from rice, wheat, rye, barley, oat and maize.

32. A product according to claim 31, wherein the vegetable protein is derived from wheat.

33. A product according to any of claims 28-30, wherein the particle size of the powder product is in the range of 20 to 90 µm, preferably in the range of 40 to 70 µm.

34. A product according to claim 31 or 32, wherein the particle size of the powder product is in the range of 5 to 40 µm, preferably in the range of 10 to 20 µm.

35. A product according to any of claims 29-31 or claim 34, wherein the content of the surface-active substance is in the range of 20 to 70 wt%, calculated on the dry matter, preferably in the range of 25 to 70 wt%, such as 25 to 60 wt%, e.g. in the range of 35 to 55 wt%.

36. A product according to claim 31, 32 or 34, wherein the content of the surface-active substance is in the range of 20 to 70 wt%, calculated on the dry matter, preferably in the range of 25 to 70 wt%, such as 25 to 50 wt%, e.g. in the range of 25 to 45 wt%.

37. A product according to claim 23, which, when tested by a whipping test using a Hobart™ A 200 mixer in the 3rd gear, results in a specific volume after 8 minutes of whipping which is at the most 500 g/l, such as 450 g/l, preferably at the most 430 g/l, more preferably at the most 410 g/l and in particular at the most 390 g/l such as at the most 350 g/l.

38. A food product made with a powder product as defined in any of claims 21-37.

39. A food product according to claim 38, which is a bakery product made using the powder product in an amount which is in the range of 0.1 to 5 wt%, preferably in the range of 0.2 to 3 wt%.

40. A food product according to claim 38 or 39, which is a sponge cake.

41. A food product according to claim 38 or 39, which is a Swiss roll.

## Patentansprüche

1. Verfahren zur Herstellung eines Pulvers, das eine nahrungsmittelverbessernde oberflächenaktive Substanz enthält, die aus lipidartigen organischen Estern ausgewählt ist, umfassend die Sprühtrocknung einer wäßrigen, die oberflächenaktive Substanz und ein pflanzenliches Protein enthaltenden Suspension, um ein freifließendes Pulver mit einem Wassergehalt von höchstens 6 Gew.% zu erhalten.

2. Verfahren nach Anspruch 1, bei dem die wäßrige Suspension eine wäßrige Emulsion ist.

3. Verfahren nach Anspruch 2, bei dem die wäßrige Emulsion eine homogenisierte wäßrige Emulsion ist.

4. Verfahren nach Anspruch 1, 2 oder 3, bei dem die einzelnen Partikel des resultierenden Pulvers eine Größe im Bereich von 5 bis 100 µm wie 10 bis 100 µm haben.

5. Verfahren nach einem der vorstehenden Ansprüche, bei dem die oberflächenaktive Substanz ausgewählt ist aus der Gruppe bestehend aus teilweise veresterten mehrwertigen Alkoholen wie Ethylenglycol, Glycerol und Propylenglycol und Kondensaten von Propylenglycol, Ethylenglycol, Glycerol, Zuckern, z.B. Sucrose und Sorbitol mit Säuren ausgewählt aus eßbaren Fettsäuren, Milchsäure, Zitronensäure, Äpfelsäure, Succinsäure, Weinsäure und Essigsäure.

6. Verfahren nach einem der vorstehenden Ansprüche, bei dem die wäßrige Suspension zusätzlich ein Kohlenhydrat enthält.

7. Verfahren nach Anspruch 6, bei dem das Kohlenhydrat ein Disaccharid, z.B. Lactose oder ein Oligosaccharid z.B. Maltodextrin ist.

8. Verfahren nach einem der vorstehenden Ansprüche, bei dem der Wassergehalt der wäßrigen Suspension im Bereich von 40 bis 80 Gew.%, wie im Bereich von 40 bis 70 Gew.%, wie im Bereich von 40 bis 60 Gew.%, bezogen auf das Gesamtgewicht der Suspension ist.

9. Verfahren nach Anspruch 1, bei dem der Gehalt des pflanzlichen Proteins im Bereich von 4 bis 30 Gew.%, bezogen auf die Trockenmasse der Suspension und bevorzugt im Bereich von 8 bis 25 Gew.%, wie im Bereich von 10 bis 20 Gew.% ist.

10. Verfahren nach Anspruch 9, bei dem das Gewichtsverhältnis von Kohlenhydrat und pflanzlichem Protein im Bereich von 90:10 bis 50:50 und bevorzugt im Bereich von 90:10 bis 70:30 liegt.

11. Verfahren nach Anspruch 1, bei dem die wäßrige Suspension zusätzlich eine Base enthält.

12. Verfahren nach einem der vorstehenden Ansprüche, bei dem das pflanzliche Protein aus Hülsenfrüchten ausgewählt aus Erbsen, Sojabohnen, Perlbohnen und Lupinien gewonnen wird.

13. Verfahren nach Anspruch 12, bei dem das pflanzliche Protein aus Perlbohnen gewonnen wird.

14. Verfahren nach den Ansprüchen 12 oder 13, bei dem sowohl das pflanzliche Protein als auch das Kohlenhydrat aus Bohnen wie Perlbohnen gewonnen wird, indem eine Mischung, die durch Kochen der Bohnen mit Wasser hergestellt wird, als Einkomponentenprotein- und Kohlenhydratquelle dient.

15. Verfahren nach einem der Ansprüche 1 bis 11, bei dem das pflanzliche Protein aus Getreide ausgewählt aus Reis, Weizen, Roggen, Gerste, Hafer oder Mais gewonnen wird.

16. Verfahren nach Anspruch 15, bei dem das pflanzliche Protein aus Weizen gewonnen wird.

17. Verfahren nach Anspruch 12 oder 13, bei dem die Partikelgröße des resultierenden Pulverprodukts im Bereich von 20 bis 90 µm und bevorzugt im Bereich von 40 bis 70 µm liegt.

18. Verfahren nach Anspruch 15 oder 16, bei dem die Partikelgröße des resultierenden Pulverprodukts im Bereich von 5 bis 40 µm und bevorzugt im Bereich von 10 bis 20 µm liegt.

19. Verfahren nach Anspruch 12, 13, oder 17, bei dem der Gehalt an oberflächenaktiver Substanz in der wäßrigen Suspension, bezogen auf die Trockenmasse im Bereich von 25 bis 70 Gew.%, bevorzugt im Bereich von 25 bis 60 Gew.% und ganz besonders bevorzugt im Bereich von 35 bis 55 Gew.% liegt.

20. Verfahren nach Anspruch 15, 16 oder 18, bei dem der Gehalt an oberflächenaktiver Substanz in der wäßrigen Suspension, bezogen auf die Trockenmasse der Suspension im Bereich von 25 bis 70 Gew.%, bevorzugt im Bereich von 25 bis 50 Gew.% und ganz besonders bevorzugt im Bereich von 25 bis 45 Gew.% liegt.

21. Freifließendes Pulverprodukt mit einem Wassergehalt von höchstens 6 Gew.%, bestehend aus Partikeln, wobei jeder Partikel 10 bis 80 Gew.% einer nahrungsmittelverbessernden oberflächenaktiven Substanz, ausgewählt aus lipidartigen organischen Estern und ein pflanzliches Protein enthält und der Gehalt des Proteins, bezogen auf die Trockenmasse im Bereich von 4 bis 30 Gew.% und bevorzugt im Bereich von 8 bis 25 Gew.%, wie im Bereich von 10 bis 20 Gew.% liegt.

22. Produkt gemäß Anspruch 21, bei dem die einzelnen Partikel des Pulvers eine Größe im Bereich von 5 bis 100 µm wie 10 bis 100 µm haben.

23. Produkt gemäß den Ansprüchen 21 oder 22, bei dem die oberflächenaktive Substanz ausgewählt ist aus der Gruppe bestehend aus teilweise veresterten mehrwertigen Alkoholen wie Ethylenglycol, Glycerol und Propylenglycol, und Kondensaten von Propylenglycol, Ethylenglycol, Glycerol, Zuckern, z.B. Sucrose und Sorbitolen mit Säuren, ausgewählt aus eßbaren Fettsäuren, Milchsäure, Zitronensäure, Äpfelsäure, Succinsäure, Weinsäure und Essigsäure.

24. Produkt gemäß einem der Ansprüche 21 bis 23, bei dem die Partikel zusätzlich ein Kohlenhydrat enthalten.

25. Produkt gemäß Anspruch 24, bei dem das Kohlenhydrat ein Disaccharid, z.B. Lactose oder ein Oligosaccharid, z.B. Maltodextrin ist.

26. Produkt gemäß den Ansprüchen 24 oder 25, bei dem das Gewichtsverhältnis von Kohlenhydrat und pflanzlichen Proteinen im Bereich von 90:10 bis 50:50 und bevorzugt im Bereich von 90:10 bis 70:30 liegt.

27. Produkt gemäß einem der Ansprüche 21 bis 26, bei dem die Partikel eine Base enthalten.

28. Produkt nach einem Ansprüche 21 bis 27, bei dem das pflanzliche Protein aus Hülsenfrüchten ausgewählt aus Erbsen, Sojabohnen, Perlbohnen und Lupinien gewonnen wird.

29. Produkt gemäß Anspruch 28, bei dem das pflanzliche Protein aus Perlbohnen gewonnen wird.

30. Produkt nach Anspruch 28 oder 29, bei dem das pflanzliche Protein und das Kohlenhydrat aus Bohnen wie Perlbohnen gewonnen wird.

31. Produkt nach einem der Ansprüche 21 bis 27, bei dem das pflanzliche Protein aus Getreide, ausgewählt aus Reis, Weizen, Roggen, Gerste, Hafer und Mais gewonnen wird.

32. Produkt nach Anspruch 31, bei dem das pflanzliche Protein aus Weizen gewonnen wird.

33. Produkt nach einem der Ansprüche 28 bis 30, bei dem die Partikelgröße des Pulverprodukts im Bereich von 20 bis 90 µm und bevorzugt im Bereich von 40 bis 70 µm liegt.

34. Produkt nach den Ansprüchen 31 oder 32, bei dem die Partikelgröße des Pulverprodukts im Bereich von 5 bis 40 µm und bevorzugt im Bereich von 10 bis 20 µm liegt.

35. Produkt nach einem der Ansprüche 29 bis 31 oder Anspruch 34, bei dem der Gehalt an oberflächenaktiver Substanz, bezogen auf die Trockenmasse, im Bereich von 20 bis 70 Gew.% und bevorzugt im Bereich von 25 bis 70 Gew.%, wie 25 bis 60 Gew.%, z.B. im Bereich von 35 bis 55 Gew.% liegt.

36. Produkt nach den Ansprüchen 31, 32 oder 34, bei dem der Gehalt an oberflächenaktiver Substanz, bezogen auf die Trockenmasse, im Bereich von 20 bis 70 Gew.% und bevorzugt im Bereich von 25 bis 70 Gew.%, wie 25 bis 50 Gew.%, z.B. im Bereich von 25 bis 45 Gew.% liegt.

37. Produkt nach Anspruch 23, das bei der Untersuchung nach einem Aufschlag-Test (Whipping-Test) unter Verwendung eines Hobart™-Mischer im dritten Gang nach 8-minütigem Aufschlagen ein spezifisches Volumen von höchstens 500 g/l, wie 450 g/l, bevorzugt höchstens 430 g/l, besonders bevorzugt höchstens 410 g/l und insbesondere höchstens 390 g/l wie höchstens 350 g/l hat.

38. Nahrungsmittelprodukt, hergestellt mit einem der in den Ansprüchen 21 bis 37 definierten Pulverprodukte.

39. Nahrungsmittelprodukt nach Anspruch 38, das eine Backware ist, die unter Verwendung des Pulverprodukts in einer Menge im Bereich von 0,1 bis 5 Gew.% und bevorzugt im Bereich von 0,2 bis 3 Gew.% hergestellt wurde.

40. Nahrungsmittelprodukt nach Anspruch 38 oder 39, das eine Wiener Masse ist.

41. Nahrungsmittelprodukt nach Anspruch 38 oder 39, das eine Biskuitrolle ist.

## Revendications

1. Un procédé de préparation d'une poudre contenant une substance tensioactive pour améliorer un produit alimentaire choisie parmi les esters organiques à caractère lipidique comprenant le séchage par pulvérisation d'une suspension aqueuse contenant la substance tensioactive et une protéine végétale pour obtenir une poudre fluide présentant une teneur maximale en humidité de 6%.

2. Un procédé selon la revendication 1, dans lequel la suspension aqueuse est une émulsion aqueuse.

3. Un procédé selon la revendication 2, dans lequel l'émulsion aqueuse est une émulsion aqueuse homogénéisée.

4. Un procédé selon la revendication 1, 2 ou 3 dans lequel les particules individuelles de la poudre résultante présentent une granulométrie dans la gamme de 5 à 100 µm, de préférence 10 à 100 µm.

5. Un procédé selon l'une quelconque des revendications précédentes, dans lequel la substance tensioactive est choisie dans le groupe comprenant des esters partiels d'alcools polyhydroxylés tels que éthylène glycol, glycérol et propylène glycol, condensats de propylène glycol, condensats d'éthylène glycol, condensats de glycérol, des sucres, par exemple sucrose et sorbitols, avec des acides choisis parmi les acides gras alimentaires, l'acide lactique, l'acide citrique, l'acide maléique, l'acide succinique, l'acide tartarique et l'acide acétique.

6. Un procédé selon l'une quelconque des revendications précédentes dans lequel la suspension aqueuse contient en outre un hydrate de carbone.

7. Un procédé selon la revendication 6, dans lequel l'hydrate de carbone est un disaccharide, par exemple, le lactose ou un oligosaccharide, par exemple la maltodextrine.

8. Un procédé selon l'une quelconque des revendications précédentes dans lequel la teneur en eau de la suspension aqueuse est comprise entre de 40 et 80% en poids, de préférence entre 40 et 70% en poids, plus particulièrement entre 40 et 60% en poids, calculée par rapport au poids global de la suspension.

9. Un procédé selon la revendication 1, dans lequel la teneur en protéine végétale est comprise entre 4 et 30% en poids, calculée par rapport à la matière sèche de la suspension, de préférence entre 8 et 25% en poids, plus particulièrement entre 10 et 20% en poids.

10. Un procédé selon la revendication 9, dans lequel le rapport pondéral de l'hydrate de carbone à la protéine végétale est compris entre 90:10 et 50:50, de préférence entre 90:10 et 70:30.

11. Un procédé selon la revendication 1, dans lequel la suspension aqueuse contient, en outre, une base.

12. Un procédé selon l'une quelconque des revendications précédentes, dans lequel la protéine végétale est dérivée des graines de légumineuses choisies parmi petits pois, pois chinois (soja), haricots blancs (*phaseolus vulgaris*) et lupins.

13. Un procédé selon la revendication 12, dans lequel la protéine végétale est dérivée de haricots blancs (*phaseolus vulgaris*).

14. Un procédé selon la revendication 12 ou 13, dans lequel la protéine végétale et l'hydrate de carbone sont tous les deux dérivés de fèves telles que des haricots blancs (*phaseolus vulgaris*) et qu'on utilise comme source unique de protéine et d'hydrate de carbone un mélange obtenu par la cuisson des fèves dans l'eau.

15. Un procédé selon l'une quelconque des revendications 1 à 11, dans lequel la protéine végétale est dérivée d'une céréale choisie parmi riz, blé, orge, seigle, avoine et maïs.

16. Un procédé selon la revendication 15, dans lequel la protéine végétale est dérivée de blé.

17. Un procédé selon la revendication 12 ou 13, dans lequel la granulométrie du produit en poudre résultant est comprise entre de 20 et 90 µm, de préférence entre 40 à 70 µm.

18. Un procédé selon la revendication 15 ou 16, dans lequel la granulométrie du produit en poudre résultant est comprise entre 5 et 40 µm, de préférence entre 10 à 20 µm.

19. Un procédé selon la revendication 12, 13 ou 17, dans lequel la teneur en substance tensioactive dans la suspension aqueuse est comprise entre 25 et 70% en poids, calculée par rapport à la matière sèche de la suspension, de préférence entre 25 et 70% en poids, et plus particulièrement entre 35 et 55% en poids.

20. Un procédé selon la revendication 15, 16 ou 18, dans lequel la teneur de la substance tensioactive dans la suspension aqueuse est comprise entre 25 et 70% en poids, calculée par rapport à la matière sèche de la suspension, de préférence entre 25 et 50% en poids, et plus particulièrement entre 25 et 45% en poids.

21. Un produit poudreux fluide dans lequel la teneur en eau est au plus de 6% en poids, composé de particules, chaque particule contenant 10 à 80% en poids d'une substance tensioactive pour améliorer un produit alimentaire, choisie parmi les esters organiques de nature lipidique et une protéine végétale, la teneur en protéine étant comprise entre 4 et 30% en poids, calculée par rapport au poids de matière sèche, de préférence entre 8 et 25% en poids, plus particulièrement entre 10 et 20% en poids.

22. Un produit selon la revendication 21, dans lequel les particules individuelles de la poudre présentent une granulométrie comprise entre 5 et 100 µm, de préférence entre 10 et 100 µm.

23. Un produit selon l'une des revendications 21 ou 22, dans lequel la substance tensioactive est choisie dans le groupe comprenant des esters partiels d'alcools polyhydroxylés tels que éthylène glycol, glycérol et polypropylène glycol, des condensats de polypropylène glycol, des condensats d'éthylène glycol, des condensats de glycérol, des sucres, par exemple sucrose et sorbitols, avec des acides choisis parmi les acides gras alimentaires, l'acide lactique, l'acide citrique, l'acide maléique, l'acide succinique, l'acide tartarique et l'acide acétique.

24. Un produit selon l'une quelconque des revendications 21 à 23, dans lequel la suspension aqueuse contient en outre un hydrate de carbone.

25. Un produit selon la revendication 24, dans lequel l'hydrate de carbone est un disaccharide, par exemple, le lactose ou un oligosaccharide, par exemple la maltodextrine.

26. Un produit selon la revendication 24 ou 25, dans lequel le rapport pondéral de l'hydrate de carbone à la protéine végétale est compris entre 90:10 et 50:50, de préférence entre 90:10 et 70:30.

27. Un produit selon l'une des revendications 21 à 26, dans lequel la suspension aqueuse contient, en outre, une base.

28. Un produit selon l'une quelconque des revendications 21 à 27, dans lequel la protéine végétale est dérivée des graines de légumineuses choisies parmi petits pois, pois chinois (soja), haricots blancs (*phaseolus vulgaris*) et lupins.

29. Un produit selon la revendication 28, dans lequel la protéine végétale est dérivée de haricots blancs (*phaseolus vulgaris*).

30. Un produit selon la revendication 28 ou 29, dans lequel la protéine végétale et l'hydrate de carbone sont dérivés de fèves telles que des haricots blancs.

31. Un produit selon l'une quelconque des revendications 21 à 27, dans lequel la protéine végétale est dérivée d'une céréale choisie parmi riz, blé, l'orge, seigle, l'avoine et maïs.

32. Un produit selon la revendication 31, dans lequel la protéine végétale est dérivée de blé.

33. Un produit selon la revendication 28 ou 30, dans lequel la granulométrie du produit en poudre résultant est comprise entre 20 et 90 µm, de préférence entre 40 et 70 µm.

34. Un produit selon la revendication 31 ou 32, dans lequel la granulométrie du produit en poudre est comprise entre 5 et 40 µm, de préférence entre 10 et 20 µm.

35. Un produit selon l'une quelconque des revendications 29 à 31 ou la revendication 34, dans lequel la teneur en substance tensioactive de la suspension aqueuse est comprise entre 25 et 70% en poids, calculée par rapport au poids de la matière sèche de la suspension, de préférence entre 25 et 70% en poids, et plus particulièrement entre 35 et 55% en poids.

36. Un produit selon la revendication 31, 32 ou 34, dans lequel la teneur en substance tensioactive de la suspension aqueuse est comprise entre 25 et 70% en poids, calculée par rapport au poids de la matière sèche de la suspension, de préférence entre 25 et 50% en poids, et plus particulièrement entre 25 et 45% en poids.

37. Un produit selon la revendication 23, qui, lors d'un essai par test de fouettage en utilisant un mixeur Hobart™ 200 en 3ème vitesse, donne un volume spécifique après 8 minutes de fouettage, qui est au maximum de 500 g/l, par exemple 450 g/l, de préférence au maximum 430 g/l, plus préférablement un maximum de 410 g/l, et en particulier, un maximum de 390 g/l, par exemple au maximum 350 g/l.

38. Un produit alimentaire fabriqué à l'aide d'un produit en poudre selon l'une quelconque des revendications 21 à 37.

39. Un produit alimentaire selon la revendication 38, qui est un produit de boulangerie-pâtisserie fabriqué en utilisant le produit en poudre en une quantité comprise entre 0,1 et 5% en poids, de préférence entre 0,2 et 3% en poids.

40. Un produit alimentaire selon la revendication 38 ou 39, qui est une génoise.

41. Un produit alimentaire selon la revendication 38 ou 39, qui est un gâteau roulé.
